# EUROPEAN PATENT APPLICATION

(11) **EP 2 494 871 A1**
(43) Date of publication of application: **05.09.2012**
(21) Application number: 11184473.4
(22) Date of filing: 10.10.2011
(51) Int. Cl.: A23F 3/00, A23L 2/00, A47G 19/14, A47G 19/16, A47J 31/00

(54) **Infusion barrel for beverage making device**

(30) Priority: 04.03.2011 TW 100203876; 04.03.2011 TW 100203856; 07.03.2011 TW 100203995
(71) Applicant: Klub Manufacturing Corp., Luzhu Township, Taipei (TW)
(72) Inventor: Yang, Yen-Pin, Taoyuan City (TW)
(74) Representative: Viering, Jentschura & Partner

(57) **Abstract**

An infusion barrel for a beverage making device includes a body (1), a steam pipe (4) and a check valve (5), wherein the body (1) has a space (11) and the steam pipe (4) is eccentrically located in the space (11) and has a chamber (41) which has an air inlet (42) and multiple air outlets (43) located in upright direction. The check valve (5) is connected to the air inlet (42) of the steam pipe (4) and controls entry of the steam to the chamber (41) from the air inlet (42) in one direction so as to generate vortexes in the beverage in the body (1).

## Description

### FIELD OF THE INVENTION

The present invention relates to an infusion barrel for a beverage making device, and more particularly, to a steam device which generates vortexes in the soup in the infusion barrel.

### BACKGROUND OF THE INVENTION

Taiwan Patent Publication No. M308725 discloses an infusion barrel for a beverage making device and includes an inlet unit having a pipe and a disk is located at the bottom of the inlet pipe. An outlet unit is connected to the lower end of the inlet unit and includes a making area and an outlet. The inlet unit has a steam pipe and a nozzle is connected to the distal end of the steam pipe. The nozzle extends through the disk of the inlet unit and enters the making area. By the nozzle, steam and hot water enter the making area to stir the water flow to obtain the beverage with desired concentration.

The steam enters the making area from the top and moves downward by the nozzle, however, there is some beverage left in the making area, so that the steam can only affect the top layer of the beverage and cannot generate vortexes.

Furthermore, when making the beverage, by using the pressurized water and steam, the beverage can be made within a short period of time by the stirring. Therefore, the pressure in the barrel is significant and requires a strong and safe barrel structure. The user may be injured by the steam when opening the cover. The conventional water outlet device is controlled by a spring which changes the pressure so as to control the time for releasing the water. The timing is difficult to control and fails to obtain the benefit of automatic water supply.

The present invention intends to provide an infusion barrel for a beverage making device which generates vortexes to make desired beverage. The present invention also improves the shortcomings about the cover and automatic water supply of the conventional beverage making device.

### SUMMARY OF THE INVENTION

The present invention relates to an infusion barrel for a beverage making device and comprises a body, a cover and a water outlet unit. The body has a space and the cover is pivotably connected to the top of the body so as to close the space. The water outlet unit is connected to the lower end of the body and communicates with the space. A steam pipe is eccentrically located in the space and has a chamber which has an air inlet and multiple air outlets are located in upright direction. A check valve is connected to the air inlet of the steam pipe and controls entry to the chamber from the air inlet in one direction.

Preferably, the space of the body has a filtering portion which has multiple apertures.

Preferably, the steam pipe has a through hole and a cap is engaged with the through hole.

Preferably, the body has a lug and a first pivotal portion. The lug has a pivot which is pivotably connected to a locking member and a first resilient member. The first resilient member has a first end and a second end, wherein the first end is fixed to the lug and the second end contacts the locking member. The cover has a protrusion and a second pivotal portion. A shaft extends through the second pivotal portion and the first pivotal portion so as to pivotably connect the cover to the body. The shaft has a second resilient member which has a third end and a fourth end. The third end is fixed to the body and the fourth end contacts the cover. The protrusion has a hook which is located corresponding to the locking member.

Preferably, the locking member has a first inclined surface and the hook has a second inclined surface which is located corresponding to the first inclined surface.

Preferably, the pivot of the lug protrudes from the lug and the protrusion of the cover has two pins respectively located on two sides thereof. A hooking wire is connected between the two pins. The hooking wire has two hooking ends hooked to the pivot.

Preferably, the lug has two slots which communicate with the pivot. The two hooking ends of the hooking wire extend through the slots and are hooked to the pivot.

Preferably, the body has a switch, a control unit and a pipe. The switch is electrically connected to the control unit and the cover activates the switch by touching the switch. The water outlet unit is connected to the pipe of the body and has a water outlet and a path. The water outlet is perpendicular to the path. A ball-shaped space is defined between a connection portion between the water outlet and the path. A ball valve is located in the ball-shaped space and has a passage. The ball valve has a transmission shaft extending through the path and is connected to a transmission member which is electrically connected to the control unit of the body. The transmission member rotates the ball valve by the transmission shaft to communicate the passage and the water outlet.

Preferably, the transmission member is a motor.

The steam blasts from the air outlet of the steam pipe and the steam pipe is located eccentrically so that vortexes are made to the beverage which can be made as desired.

The present invention has a filtering portion so that the tea does not need to be filtered and the steam enters the apertures and enters into the filtering portion to generate vortexes the tea in the filtering portion. The leaves of tea can be easily cleaned up by removing the filtering portion from the body.

The steam pipe has a through hole and a cap closes the through hole so that the steam pipe can be cleaned to prevent accumulation of the tea scales attached to the steam pipe to stock the air outlet.

The locking member has a first inclined surface and the hook has a second inclined surface which is located corresponding to the first inclined surface. When the user presses the cover, the second inclined surface pushes the first inclined surface so that the cover is connected to the body. The action is easy and effort-saving. The first resilient member of the pivot automatically returns the locking member. Therefore, the user can use one hand to operate the device.

The cover has the hooking wire which hooks the pivot by the two hooking ends to prevent the user from unintentionally touching the hooking wire to suddenly releasing the hooking wire from the pivot.

The shaft has a second resilient member which has one end fixed to the body and the other end contacts the cover, so that when pressing the cover, the second resilient member is compressed. When the cover is opened, the second resilient member pops the cover to open automatically.

By closing the cover, the cover touches the switch to close the water outlet unit. By opening the cover, the cover is disengaged from the switch and the water outlet unit is opened so that the water supply is available when the cover is opened, without any delay.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is a perspective view to show the infusion barrel of the present invention;
Fig. 2 is a cross sectional view of the infusion barrel of the present invention;
Fig. 3 shows that the infusion barrel of the present invention is used to make tea;
Fig. 4 shows that the infusion barrel of the present invention is used to make tea by using a tea bag;
Fig. 5 is a perspective view to show the second embodiment of the infusion barrel of the present invention;
Fig. 6 is a cross sectional view of the second embodiment of the infusion barrel of the present invention (the cover is located at a distance from the body because of the second resilient member);
Fig. 7 shows that the second inclined surface of the hook pushes the first inclined surface of the hooking member;
Fig. 8 shows that the cover is completely closed onto the body;
Fig. 9 shows that the hooking ends of the hooking wire extend through the slot and are engaged with the pivot;
Fig. 10 shows that the hooking ends of the hooking wire hook the pivot;
Fig. 11 is a perspective view to show the third embodiment of the infusion barrel of the present invention;
Fig. 12 is a top cross sectional view of the third embodiment of the infusion barrel of the present invention, wherein the cover is opened and the water outlet unit is opened, and
Fig. 13 is a top cross sectional view of the third embodiment of the infusion barrel of the present invention, wherein the cover is closed and the water outlet unit is closed.

### DETAILED DESCRIPTION OF THE PREFERRED EMBODIMENT

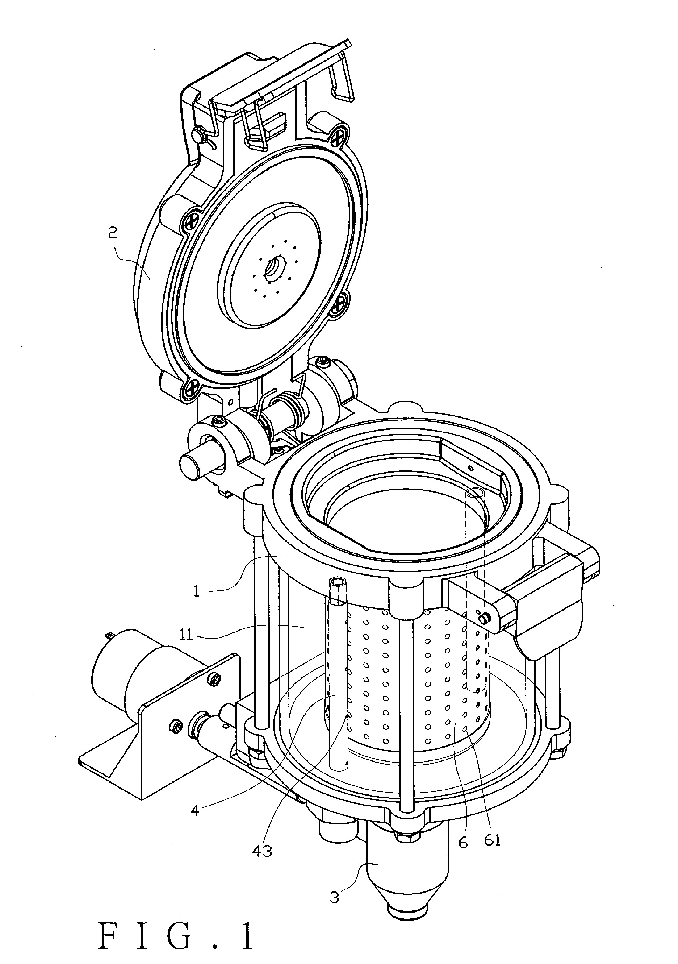

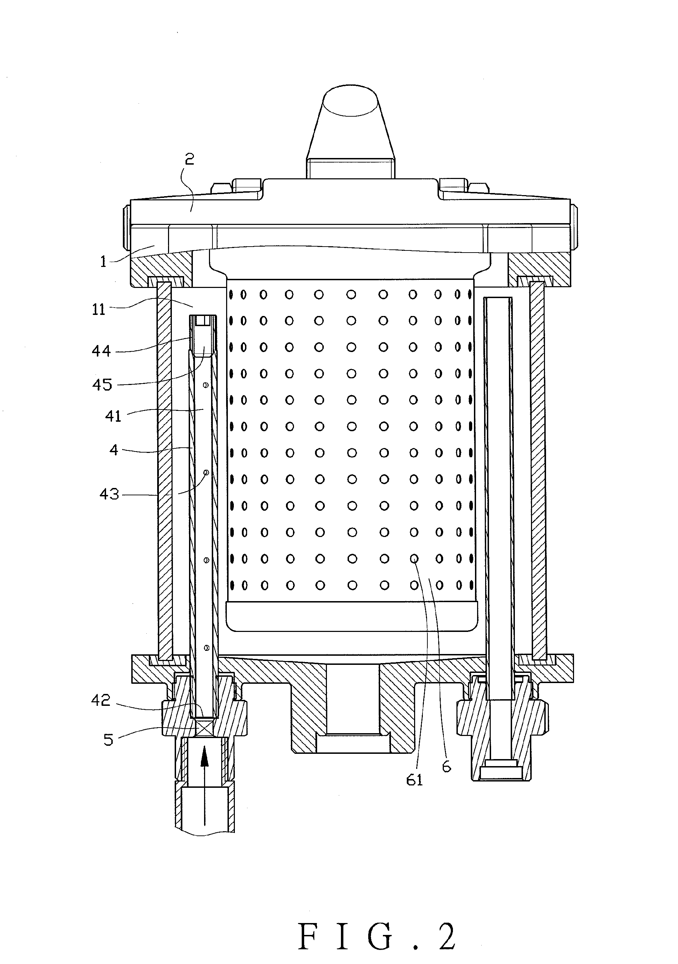

Referring to Figs. 1 and 2, the infusion barrel for a beverage making device of the present invention comprises a body 1, a cover 2, a water outlet unit 3, a stem pipe 4 and a check valve 5. The body 1 has a space 11 and the cover 2 is pivotably connected to the top of the body 1 so as to close the space 11. The water outlet unit 3 is connected to the lower end of the body 1 and communicates with the space 11.

The steam pipe 4 is eccentrically located in the space 11 in an upright direction and has a chamber 41 which has an air inlet 42 and multiple air outlets 43 located in the upright direction.

The check valve 5 is connected to the air inlet 42 of the steam pipe 4 and controls entry of the steam to the chamber 41 from the air inlet 42 in one direction.

The space 11 of the body 1 has a filtering portion 6 which has multiple apertures 61.

The steam pipe 4 has a through hole 44 and a cap 45 is engaged with the through hole 44. The cap 45 is used for cleaning of the inside of the steam pipe 4 to prevent from being stocked by accumulation of tea scales.

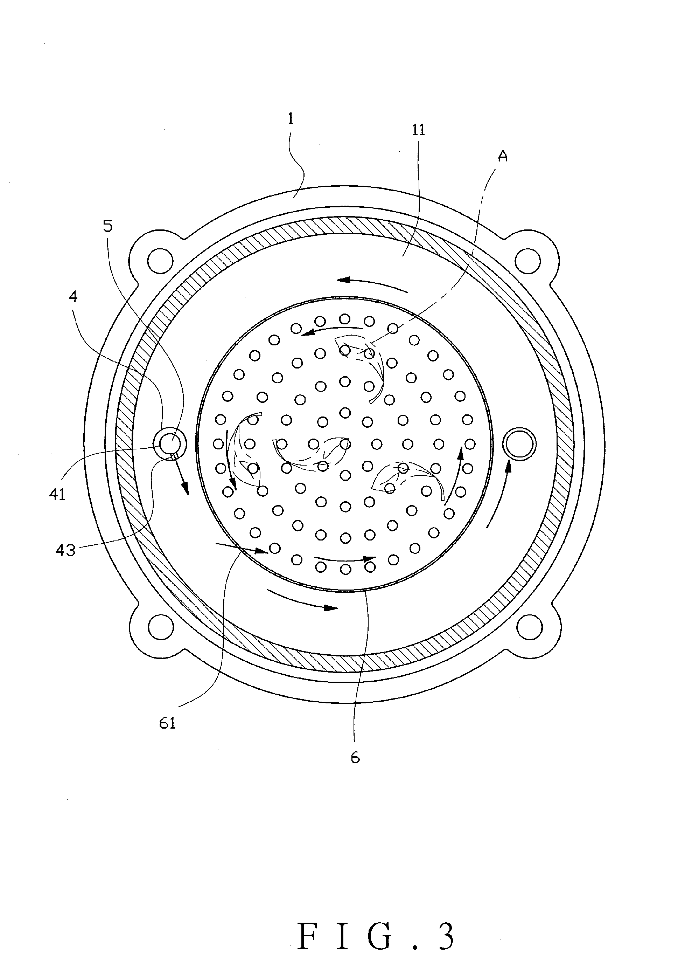

As shown in Figs. 2 and 3, the tea "A" is put into the filtering portion 6 and hot water is supplied, the steam enters into the chamber 41 via the air inlet 42 of the steam pipe 4. The check valve 5 in the air inlet 42 prevents the steam from flowing backward. The steam ejects from the air outlet 43 and enters into the space 11 of the body 1 to generate vortexes to the hot water. The hot water and the vortexes combined with the steam pass through the apertures 61 of the filtering portion 6 and makes the hot water in the filtering portion 6 have vortexes to stir the tea "A" so that the tea can be made quickly with desired characters.

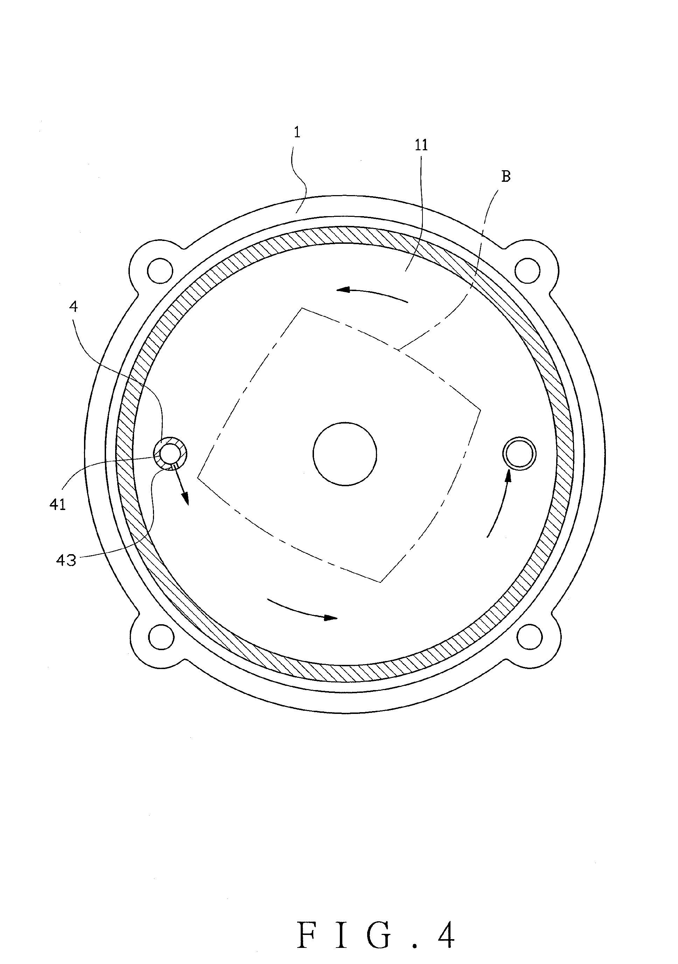

As shown in Fig. 4, the present invention can make tea by using a tea bag which does not need to be filtered. The tea bag "B" and hot water are put into the space 11 of the body 1 and the steam ejects from the air inlet 42 of the steam pipe 4 so as to generate vortexes to the hot water in the space 11 to make a desired tea beverage.

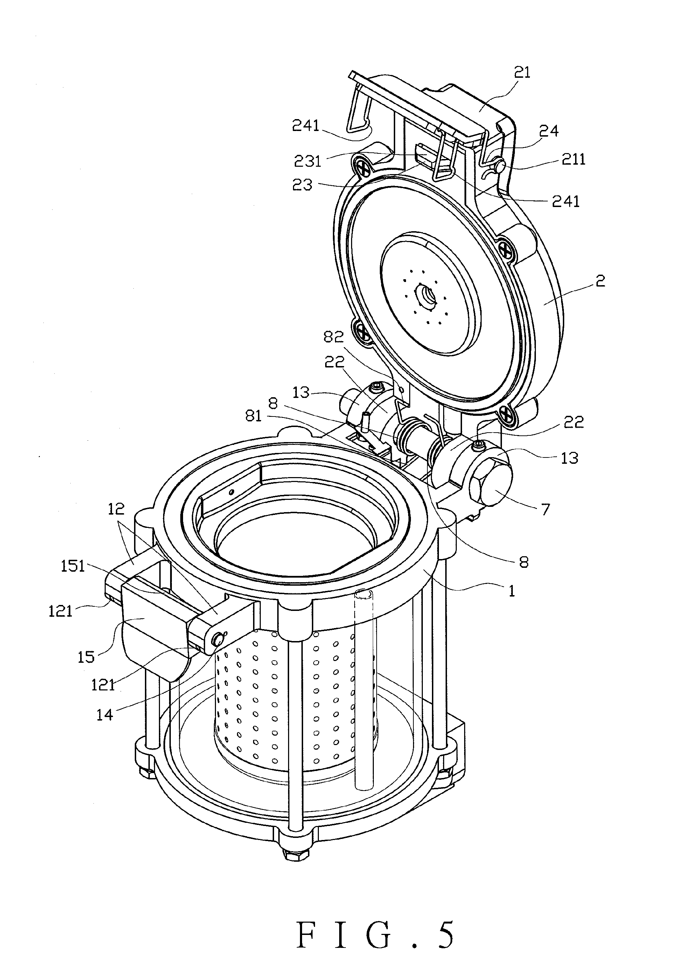

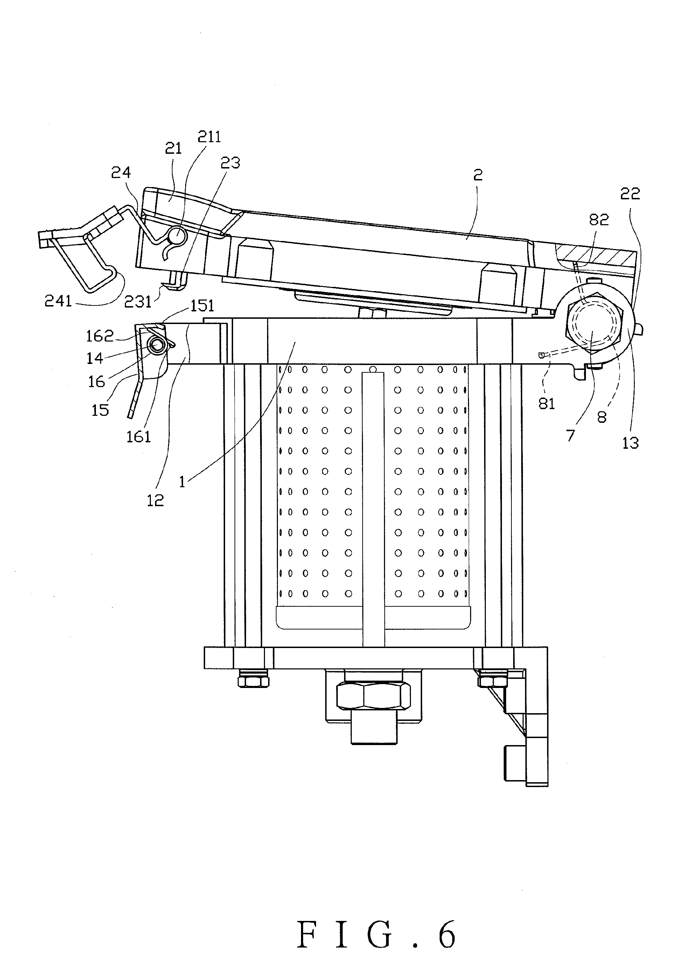

Figs. 5 and 6 show the second embodiment of the present invention. The body 1 has two lugs 12 and a first pivotal portion 13. The lugs 12 each have a pivot 14 which is pivotably connected to a locking member 15 and a first resilient member 16. The first resilient member 16 has a first end 161 and a second end 162, wherein the first end 161 is fixed to the lug 12 and the second end 162 contacts the locking member 15. The locking member 15 has a first inclined surface 151.

The cover 2 has a protrusion 21 and a second pivotal portion 22. A shaft 7 extends through the second pivotal portion 22 and the first pivotal portion 13 so as to pivotably connect the cover 2 to the body 1. The protrusion 21 has a hook 23 which is located corresponding to the locking member 15. The hook 23 has a second inclined surface 231 which is located corresponding to the first inclined surface 151 of the locking member 15. The protrusion 21 of the cover 2 has two pins 211 respectively located on two sides thereof and a hooking wire 24 is connected between the two pins 211. The hooking wire 24 has two hooking ends 241. The lug 12 has two slots 121 which communicate with the pivot 14. The two hooking ends 241 of the hooking wire 24 extend through the slots 121 and are hooked to the pivot 14.

The shaft 7 has a second resilient member 8 which has a third end 81 and a fourth end 82. The third end 81 is fixed to the body 1 and the fourth end 82 contacts the cover 2.

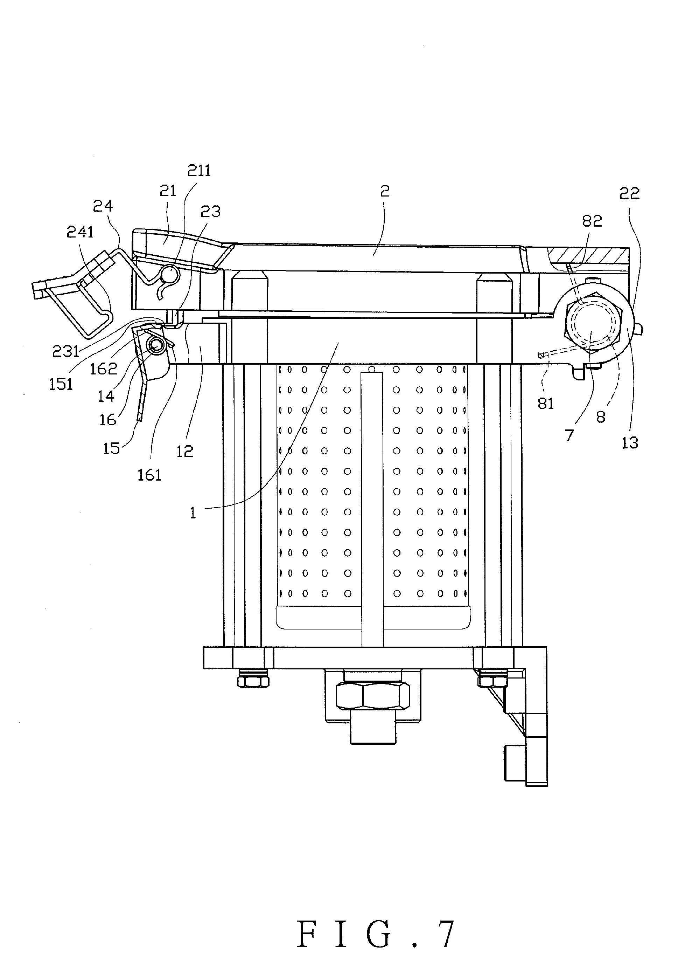

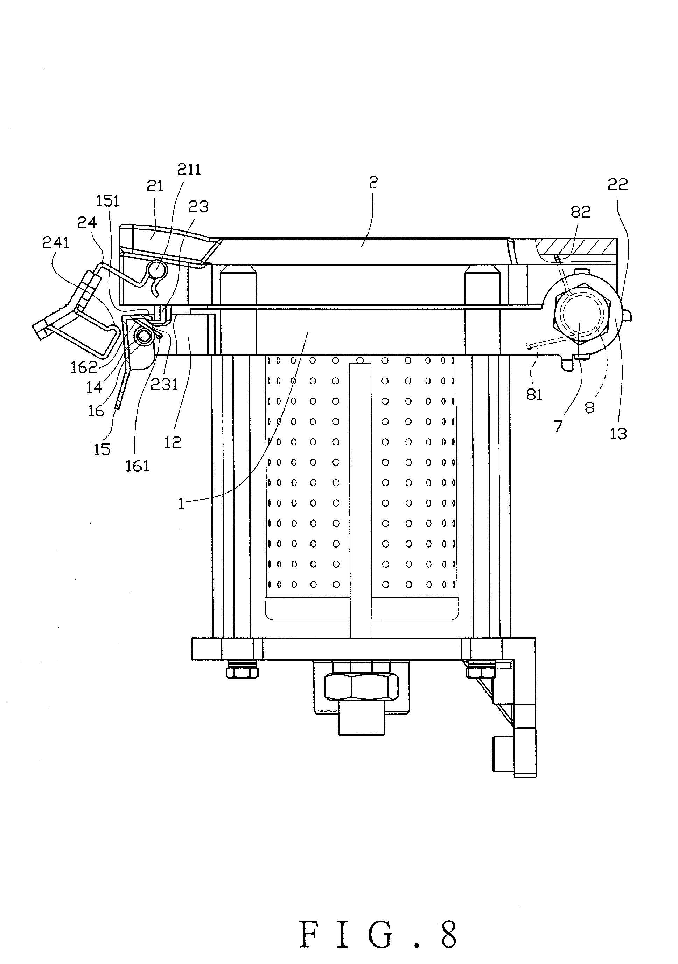

As shown in Figs. 7 and 8, the cover 2 is first pressed and the second inclined surface 213 of the hook 23 pushes the first inclined surface 151 of the locking member 15, so that the second end 162 of the first resilient member 16 is activated by the movement of the locking member 15 and the hook 23 contacts the locking member 15. Therefore, the cover 2 is closed upon the body 1. This allows the user to operate the device by one hand. As shown in Fig. 8, when the hook 23 is hooked to the locking member 15, the force that the hook 23 applies to the locking member 15 does not exist, the second end 162 of the first resilient member 16 generates a force to make the locking member 15 firmly presse on the hook 23, which is convenient for the user to use the device.

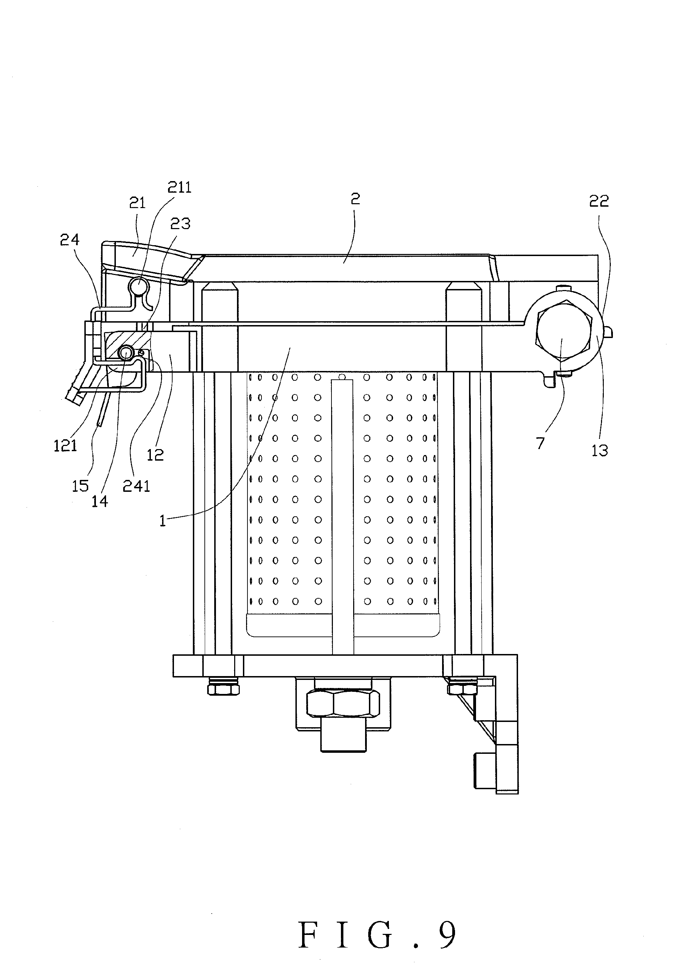

As shown in Fig. 9, when the hook 23 is hooked to the locking member 15, the hooking wire 24 is pivoted downward so that the two hooking ends 241 of the hooking wire 24 extend through the slot 121 and hook to the pivot 14 of the lug 12 so as to prevent the user from unintentionally touching the locking member 15 to release the hook 23. It is noted that when making the tea, it is dangerous if the cover 2 is unexpectedly opened. By the arrangement mentioned above, the safety to the users is ensured.

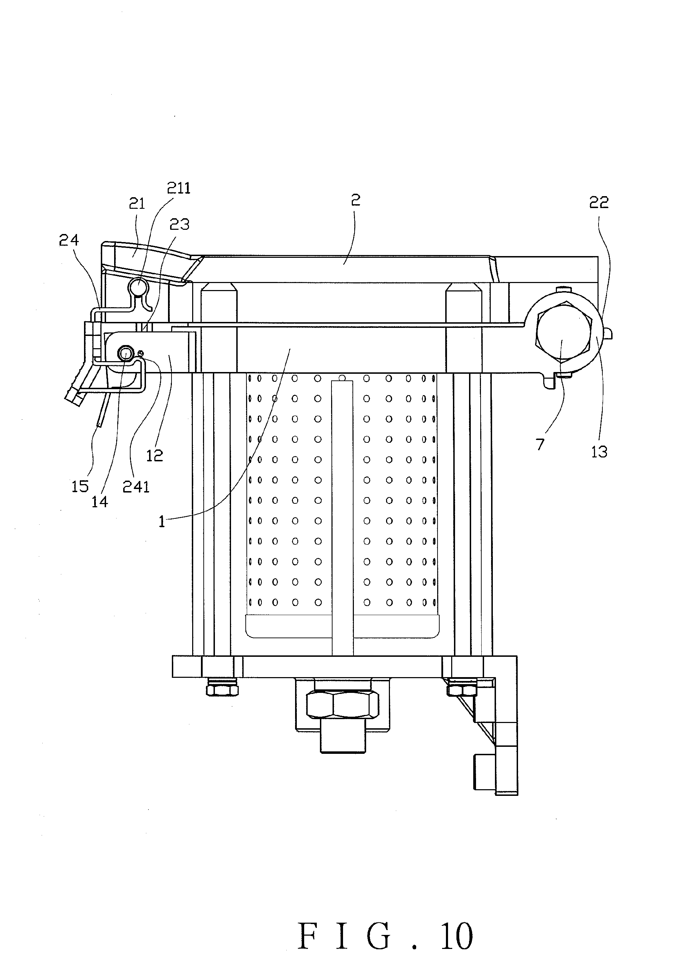

As shown in Fig. 10, which shows another embodiment of the hooking ends 241 hooked the pivot 14, wherein the pivot 14 protrudes out from the lugs 12 and the hooking ends 241 are hooked to the pivot 14.

Referring to Figs. 6 to 8, the cover 2 is located at a distance from the body 1 because of the second resilient member 8. When pressing the cover 2, the cover 2 presses the fourth end 84 of the second resilient member 8 and compresses the second resilient member 8 until the cover 2 completely closes upon the body 1. That is to say, the fourth end 84 of the second resilient member 8 is pressed between the cover 2 and the body 1, so that when the user presses the locking member 15 to release the cover 2, the fourth end 84 of the second resilient member 8 generates a force to open the cover 2. In other words, the cover 2 is automatically opened to prevent the user from being injured by steam when the cover 2 is opened.

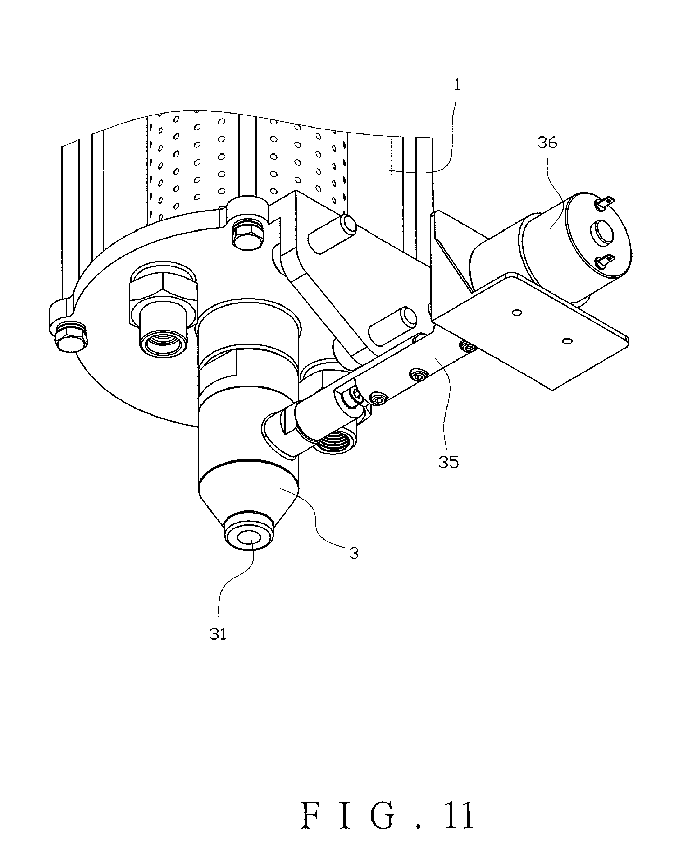

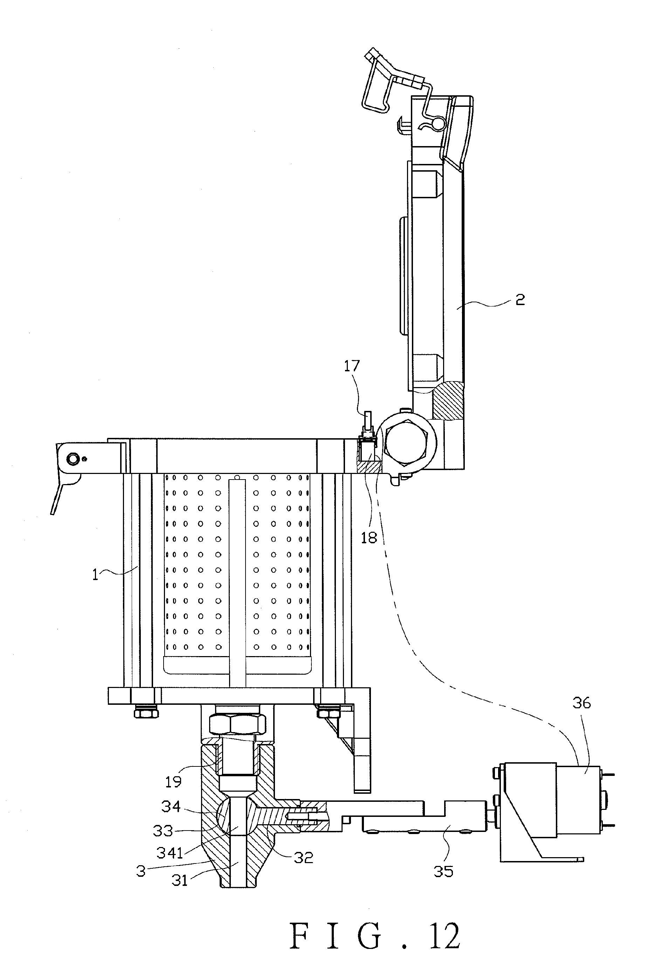

Figs.11 and 12 show the third embodiment of the present invention. The body 1 has a switch 17, a control unit 18 and a pipe 19. The switch 17 is electrically connected to the control unit 18 and the cover 2 is pivotably connected to the body 1 so as to activate the switch 17 by touching the switch 17.

The water outlet unit 3 is connected to the pipe 19 of the body 1 and has a water outlet 31 and a path 32. The water outlet 31 is perpendicular to the path 32. A ball-shaped space 33 is defined between a connection portion between the water outlet 31 and the path 32. A ball valve 34 is located in the ball-shaped space 33 and has a passage 341. The ball valve 34 has a transmission shaft 35 extending through the path 32 and is connected to a transmission member 36 which is a motor and electrically connected to the control unit 18 of the body 1. The transmission member 36 rotates the ball valve 34 by the transmission shaft 35 to communicate the passage 341 and the water outlet 31.

As shown in Fig. 12, the cover 2 is not closed upon the body 1 and the switch 17 is not yet touched. The passage 341 communicates with the water outlet 31.

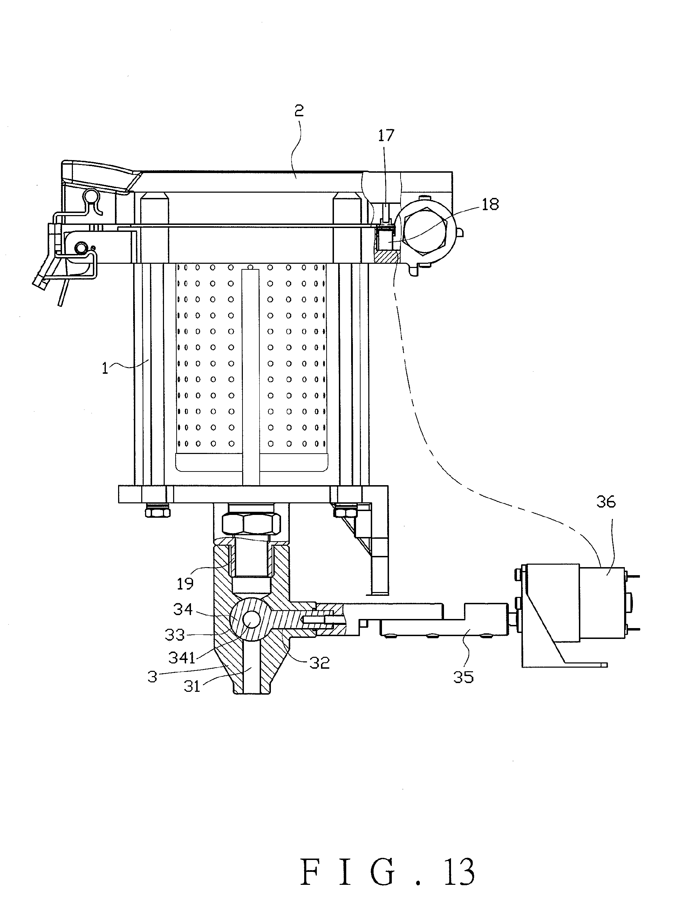

As shown in Fig. 13, when making beverage, the tea or the beverage material is put in the body 1 and the cover 2 is closed. When the cover 2 is closed, the cover 2 touches the switch 17 which sends a signal to the control unit 18 and the control unit 18 sends a signal to the transmission member 36. The transmission member 36 rotates the ball valve 34 by the transmission shaft 35 to offset the passage 341 from the water outlet 31 which is then closed. The water and steam can then be supplied to the body 1 to make beverage. When the beverage is made, the user opens the cover 2 as shown in Fig. 12 and the switch 17 is disengaged from the cover 2 so that another signal is sent to the control unit 18 and the control unit 18 sends a signal to the transmission member 36. The transmission member 36 rotates the ball valve 34 by the transmission shaft 35 to communicate the passage 341 with the water outlet 31 which is then opened. The beverage then flows out from the body 1.

By the beverage making device of the present invention, the water supply can be available when the cover 2 is opened without any delay, and the beverage starts to be made when the cover is closed.

While we have shown and described the embodiment in accordance with the present invention, it should be clear to those skilled in the art that further embodiments may be made without departing from the scope of the present invention.

## Claims

1. An infusion barrel for a beverage making device, comprising a body (1), a cover (2) and a water outlet unit (3), the body (1) having a space (11) and the cover (2) pivotably connected to a top of the body (1) so as to close the space (11), the water outlet unit (3) connected to a lower end of the body (1) and communicating with the space (11), and **characterized in that** the infusion barrel further comprises:
a steam pipe (4) eccentrically located in the space (11) and having a chamber (41) which has an air inlet (42) and multiple air outlets (43) located in an upright direction, and
a check valve (5) connected to the air inlet (42) of the steam pipe (4) and controlling entry to the chamber (41) from the air inlet (42) in one direction.

2. The infusion barrel as claimed in claim 1, wherein the space (11) of the body (1) has a filtering portion (6) which has multiple apertures (61).

3. The infusion barrel as claimed in claim 1, wherein the steam pipe (4) has a through hole (44) and a cap (45) is engaged with the through hole (44).

4. The infusion barrel as claimed in claim 1, wherein the body (1) has a lug (12) and a first pivotal portion (13), the lugs (12) each have a pivot (14) which is pivotably connected to a locking member (15) and a first resilient member (16), the first resilient member (16) has a first end (161) and a second end (162), the first end (161) is fixed to the lug (12) and the second end (162) contacts the locking member (15), the cover (2) has a protrusion (21) and a second pivotal portion (22), a shaft (7) extends through the second pivotal portion (22) and the first pivotal portion (13) so as to pivotably connect the cover (2) to the body (1), the shaft (7) has a second resilient member (8) which has a third end (81) and a fourth end (82), the third end (81) is fixed to the body (1) and the fourth end (82) contacts the cover (2), the protrusion (21) has a hook (23) which is located corresponding to the locking member (15).

5. The infusion barrel as claimed in claim 4, wherein the locking member (15) has a first inclined surface (151) and the hook (23) has a second inclined surface (152) which is located corresponding to the first inclined surface (151).

6. The infusion barrel as claimed in claim 4, wherein the pivot (14) of the lug (12) protrudes from the lug (12), the protrusion (21) of the cover (2) has two pins (211) respectively located on two sides thereof and a hooking wire (24) is connected between the two pins (211), the hooking wire (24) has two hooking ends (241) hooked to the pivot (14).

7. The infusion barrel as claimed in claim 6, wherein the lug (12) has two slots (121) which communicate with the pivot (14), the two hooking ends (241) of the hooking wire (24) extend through the slots (121) and are hooked to the pivot (14).

8. The infusion barrel as claimed in claim 1, wherein the body (1) has a switch (17), a control unit (18) and a pipe (19), the switch (17) is electrically connected to the control unit (18) and the cover (2) activates the switch (17) by touching the switch (17), the water outlet unit (3) is connected to the pipe (19) of the body (1) and has a water outlet (31) and a path (32), the water outlet (31) is perpendicular to the path (32), a ball-shaped space (33) is defined between a connection portion between the water outlet (31) and the path (32), a ball valve (34) is located in the ball-shaped space (33) and has a passage (341), the ball valve (34) has a transmission shaft (35) extending through the path (32) and is connected to a transmission member (36) which is electrically connected to the control unit (18) of the body (1), the transmission member (36) rotates the ball valve (34) by the transmission shaft (35) to communicate the passage (341) and the water outlet (31).

9. The infusion barrel as claimed in claim 8, wherein the transmission member (36) is a motor.
